# FASCICULE DE BREVET EUROPEEN

(11) **EP 1 256 268 B1**
(45) Date de publication et mention de la délivrance du brevet: **29.11.2006**
(21) Numéro de dépôt: 02364022.0
(22) Date de dépôt: 07.05.2002
(51) Int. Cl.: A01B 49/06

(54) **Dispositif d'attelage d'un semoir à une machine de travail du sol, à biellettes de fixation**
Kupplungsvorrichtung zwischen Sähmaschine und Bodenbearbeitungsgerät mit Befestigungsstäben
Device for hitching a seeddrill to a soil working machine with fastening rods

(30) Priorité: 10.05.2001 FR 0106185
(43) Date de publication de la demande: 13.11.2002
(73) Titulaire: SULKY-BUREL S.A., F-35220 Chateaubourg (FR)
(72) Inventeur: Chevalier, Patrick, 35220 Chateaubourg (FR); Edeline, Christophe, 35530 Servon-sur-Vilaine (FR)
(74) Mandataire: Branger, Jean-Yves

(56) Documents cités:
- DE-A- 3 124 266
- DE-A- 3 420 868
- DE-A- 4 103 537
- FR-A- 2 671 450
- GB-A- 1 592 927

## Description

La présente invention se rapporte à un dispositif d'attelage d'un semoir à une machine de travail du sol.

Il est bien connu d'atteler à un tracteur un ensemble d'instruments agricoles comprenant une machine de travail du sol tel qu'une herse, et un semoir éventuellement associé à un rouleau.

La machine de travail du sol est placée en avant du semoir si l'on considère le sens de déplacement de l'ensemble.

Ce genre de combinaison est avantageux pour l'agriculteur dans la mesure où il permet, en un seul passage sur le terrain, de préparer le sol et d'y déposer les semences.

On a proposé dans le brevet français n° 91 00470 au nom du présent demandeur un tel dispositif d'attelage. Ce dispositif est plus particulièrement destiné à s'adapter à un semoir et à une machine de travail du sol qui ne sont pas initialement conçus pour être associés l'un à l'autre. C'est par exemple le cas lorsqu'il s'agit d'atteler un nouveau semoir à une machine de marque différente et/ou à un modèle ancien que l'agriculteur a déjà en sa possession.

Ce dispositif fait usage de bras télescopiques et peut être réglé aussi bien en hauteur que longitudinalement pour tenir compte non seulement de l'encombrement de la machine de travail du sol mais également de la position du semoir et du rouleau, quand ce dernier est présent.

On a proposé ces dernières années des semoirs de structure générale traditionnelle, mais équipés d'une série de barres de semis montées sur parallélogramme déformable.

Dès lors, en fonction de l'encombrement de la machine de travail du sol et du rouleau auquel est éventuellement associé le semoir, on oriente alors en conséquence la disposition des barres de semis, aussi bien en hauteur que longitudinalement, par déformation desdits parallélogrammes.

De ce fait, il n'est plus nécessaire de disposer d'un dispositif d'attelage qui soit réglable à la fois en hauteur et longitudinalement, puisque cette fonction est dévolue aux parallélogrammes déformables. Il a donc été prévu un dispositif d'attelage équipé non pas de bras télescopiques, mais de tiges de fixation soudées, l'extrémité libre de ces tiges étant destinée à être fixée sur la machine de travail du sol.

Cette situation génère un certain nombre de problèmes.

En premier lieu, si l'agriculteur vient à changer de type de machine de travail et/ou de rouleau, il n'est pas certain que l'orientation particulière et pré-établie des tiges de fixation précitées soit compatible avec ces nouveaux équipements.

Par ailleurs, le fabricant du semoir qui peut être également le fabricant du dispositif d'attelage, ne peut pas connaître à l'avance le type de matériel (machine de travail du sol et rouleau) déjà en place chez l'agriculteur. Par conséquent, le soudage de tiges de liaison ne peut être fait qu'a posteriori et ne peut être en aucun cas rationalisé.

On connaît par le document DE-A-31 24 266, non pas un dispositif d'attelage d'un semoir à une machine de travail du sol, mais un semoir pour lequel on souhaite, quand il est relevé, que les socs semeurs et équipements auxiliaires ne soient pas endommagés par le terrain au cours du virage en bout de champ.

Pour ce faire, un dispositif de pivotement est raccordé au troisième point d'attelage du semoir sur le tracteur. Dans le mode de réalisation particulier, le dispositif de pivotement est constitué par un levier de basculement raccordé d'une part à un vérin de levage et, d'autre part, au troisième point d'attelage des butées appropriées limitant la rotation de l'ensemble.

En fait une seule biellette mobile actionnée par un vérin agit sur la position du semoir, à chaque extrémité du champ, par déformation de la géométrie de l'attelage.

Cet agencement déformable n'apporte pas de solution adaptée aux problèmes développés ci-dessus.

La présente invention a justement pour but de pallier à ces inconvénients.

Dans cette optique, elle vise à fournir un dispositif d'attelage qui est muni de moyens de fixation à la machine de travail du sol qui remplissent les mêmes fonctions que les tiges de fixation dont il a été fait état en début de description, mais sans en présenter les inconvénients.

Elle vise également à fournir un dispositif simple et que l'on puisse fabriquer en série, tout en pouvant s'adapter sur une multitude de machines de travail du sol et de semoirs différents.

Ce dispositif d'attelage d'un semoir à une machine de travail du sol est du type comportant un châssis en forme de "V" renversé, dont les branches ont une extrémité coudée vers l'extérieur pour constituer des guides transversaux, ce châssis étant destiné à être fixé à la machine de travail du sol par au moins une paire d'éléments de fixation dirigés transversalement, ces guides et cette paire d'éléments étant symétriquement disposés de part et d'autre du plan longitudinal médian du châssis, ce dernier comprenant également deux étriers aptes à être déplacés chacun latéralement et immobilisés dans la position voulue sur l'un des guides, chaque étrier comportant une portion en forme de chape dont les deux joues s'étendent longitudinalement.

Selon l'invention, ce dispositif comporte en outre au moins deux paires de biellettes, chaque paire étant reliée à la machine de travail du sol par au moins un des éléments de fixation et à chacune desdites chapes en deux points différents présents sur chaque joue, l'ensemble ainsi formé étant indéformable mais démontable.

Ainsi, en utilisant des biellettes de longueurs égales ou différentes et en jouant sur l'emplacement des points de fixation de ces biellettes à la machine et aux chapes, on va pouvoir fournir un dispositif d'attelage qui peut s'adapter à une multitude de configurations.

Toutefois, le caractère démontable de l'ensemble ainsi formé va pouvoir permettre de s'adapter à une autre configuration d'outils dans laquelle la machine et/ou le rouleau ont des tailles et/ou des encombrements différents.

Selon d'autres caractéristiques avantageuses mais non limitatives de ce dispositif :
- les biellettes d'une même paire sont reliées à ladite machine par un seul élément de fixation, de sorte que les trois points de liaison desdites biellettes à la machine et aux chapes forment un triangle fictif ;
- une des biellettes de chaque paire est reliée à ladite machine par un élément de fixation, tandis que la seconde biellette est fixée sur la première ;
- les biellettes d'une même paire sont reliées à ladite machine par des éléments de fixation en des points différents, de sorte que les quatre points de liaison desdites biellettes à la machine et aux chapes forment un quadrilatère fictif ;
- les extrémités opposées des biellettes, ainsi que la machine et les chapes portent des trous dans lesquels sont aptes à être engagés lesdits éléments et/ou d'autres moyens de liaison ;
- lesdites chapes comportent au moins trois trous, de sorte que les points de liaison desdites biellettes auxdites chapes peuvent être sélectionnés parmi deux de ces trois trous au moins ;
- lesdites biellettes sont de longueurs différentes ;
- l'extrémité desdites biellettes destinée à être fixée à ladite machine comporte une série de trous voisins, ces biellettes étant aptes à être sectionnées entre deux trous voisins pour présenter une longueur prédéterminée ;
- la pointe du châssis en forme de "V" renversé présente un trou de passage pour l'axe d'articulation d'une biellette d'attelage de longueur réglable.

D'autres caractéristiques et avantages de l'invention apparaîtront à la lecture de la description qui va suivre de certains modes de réalisation préférentiels.

Cette description sera faite en référence aux dessins annexés dans lesquels :
- la figure 1 est une vue schématique, en perspective d'un premier mode de réalisation du dispositif ;
- la figure 2 est une vue de côté schématique du dispositif de la figure 1, celui-ci se trouvant mis en place entre le bâti d'un semoir et le bâti d'une machine de travail du sol ;
- la figure 3 est une représentation du même dispositif selon une vue similaire à celle de la figure 2, les biellettes du dispositif occupant cependant une position différente ;
- la figure 4 est également une vue de côté d'un dispositif conforme à l'invention mais avec des biellettes et un agencement mutuel de celles-ci prévus différents ;
- la figure 5 est une vue de côté schématique d'une autre forme de réalisation du dispositif et plus précisément de sa partie inférieure.

Le dispositif représenté sur les figures a une structure essentiellement similaire à celle décrite dans le brevet 91 00470 précité. Au besoin, on pourra s'y reporter pour plus de précisions.

Toutefois, pour faciliter la lecture de la présente demande, on reviendra ci-après sur la structure générale de ce dispositif.

Le dispositif en question comprend essentiellement un châssis 1 en forme générale de "V" renversé formé d'un assemblage par soudage de tubes métalliques de section rectangulaire ou carrée. Les branches du "V" sont référencées 10.

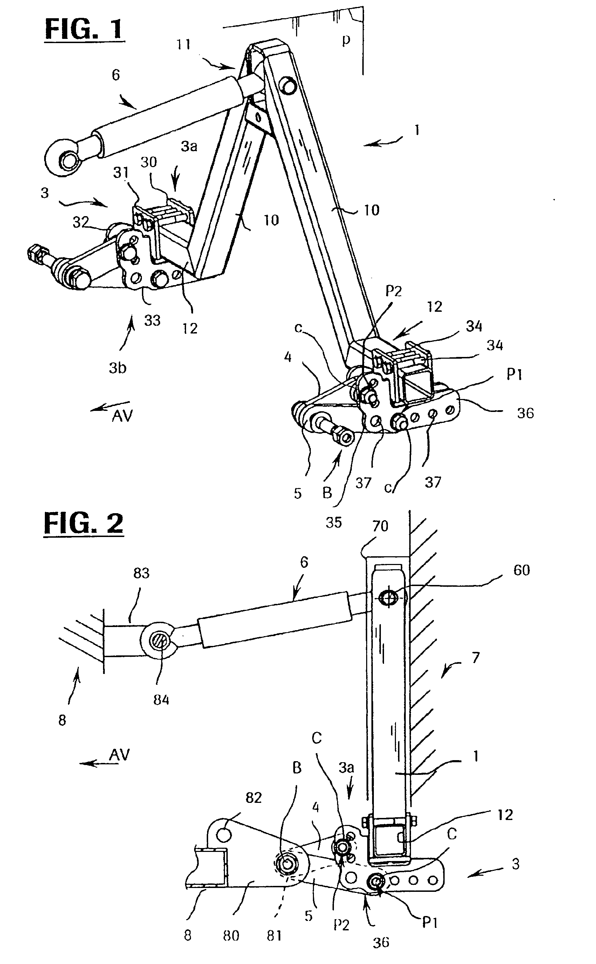

A sa base, il est pourvu de deux portions 12 qui prolongent horizontalement vers l'extérieur, les branches 10 du "V". Ainsi, le châssis à une forme symétrique par rapport à un plan vertical médian désigné **P** à la figure 1.

A la pointe du "V", c'est-à-dire en partie supérieure du châssis, est fixée une pièce 11 qui assure la liaison entre les branches 10. Cette pièce délimite une ouverture centrale dans laquelle est articulée, autour d'un axe transversal 60, une des extrémités d'une biellette 6 d'attelage de longueur réglable, connue en soi.

Chaque portion horizontale 12 du châssis sert de guide à un étrier 3. Celui-ci sert lui-même au montage d'une paire de biellettes 4 et 5 décrites plus loin dans la description.

La notion de droite et de gauche qui pourra être exprimée ci-après est faite par rapport au sens d'avance du dispositif lorsque celui-ci est monté à l'avant d'un semoir, et par conséquent à l'arrière d'une machine de travail du sol, celle-ci étant elle-même attelée à un tracteur. Ce sens d'avancement est symbolisé par la flèche **AV** aux figures 1 et 2.

Chaque étrier présente une portion supérieure 3a en forme de cornière en "U" dont l'ouverture est tournée vers le haut. Cette cornière peut être emboîtée sur chacun des guides tubulaires 12 et être déplacée latéralement sur celui-ci. Les ailes verticales 30 et 31 de la cornière 3a présentent des ouvertures qui autorisent le passage de moyens de serrage 34 tels que des vis ou boulons. En serrant ces derniers, on déforme légèrement l'une vers l'autre les ailes 30 et 31, ce qui assure l'immobilisation par friction de l'étrier 3 sur le guide 2, dans la position souhaitée.

Ainsi que cela est également connu du brevet précité, la partie inférieure 3b de chaque étrier a la forme d'une chape composée de deux joues 32 et 33 qui sont disposées verticalement et parallèlement au plan **P**. Les joues 32 et 33 ont, vues de côté, la forme générale d'un sabot en "L" avec une partie verticale 35 dirigée vers l'avant du dispositif et une partie horizontale 36 orientée vers le dessous.

Chaque joue présente une série de plusieurs trous 37 régulièrement réparties sur les portions verticales et horizontales. Dans le cas présent, ces trous sont au nombre de huit.

Toutefois, dans une forme de réalisation non représentée, chaque joue pourrait présenter au minimum deux trous différents 37, ou un nombre plus important.

Bien entendu, on retrouve la même disposition de trous dans la seconde joue de l'étrier, ce qui permet la mise en place dans la chape de moyens de fixation à friction, tel qu'une vis, un boulon ou un élément équivalent.

Ainsi que le montre plus particulièrement la figure 2, le dispositif selon l'invention est destiné à être fixé d'une part aux éléments de bâti d'un semoir 7 et d'une machine à travailler le sol 8.

Comme cela est bien connu, le châssis triangulaire 1 est retenu contre la face avant du semoir dans une position voisine de la verticale au moyen de profilés 70 sous lesquels le châssis a été emboîté par un mouvement de haut en bas. La fixation est complétée le cas échéant par une vis ou un boulon ou une cheville (non représentés) d'axe longitudinal, situé en partie inférieure de la pièce 11 qui sépare les branches 10.

La liaison du châssis avec la partie haute de la machine de travail du sol 8 est assurée, comme précisé plus haut, par la bielle de longueur variable 6. Celle-ci est reliée à une ferrure 83 solidaire de la machine, par un axe transversal 84.

En partie inférieure, la machine de travail du sol comporte également une ferrure d'attelage 80 qui est destinée à être reliée au dispositif par une paire de biellettes, chaque biellette coopérant par ailleurs avec les deux joues 32 et 33 de chacun des étriers décrits précédemment.

Dans l'exemple de réalisation des figures 1 et 2, les biellettes en question, numérotées 4 et 5 ont des longueurs respectives différentes.

La biellette la plus courte 4 est fixée à la ferrure 80 au niveau d'un trou référencé 81. Elle est fixée également aux joues 32 et 33 au niveau d'un des trous 37 de leur portion verticale 35.

La seconde biellette 5, de plus grande longueur, est fixée à la ferrure au niveau du même trou, et aux joues 32 et 33 au niveau d'un trou différent disposé sur la portion horizontale 36.

Les deux biellettes sont donc fixées aux joues en deux points distincts identifiés **P**_{**1**} et **P**_{**2**}**.**

Des ensembles de fixation **B** et **C** assurent la liaison des biellettes 4 et 5 à la ferrure 80 et aux joues 32 et 33, de façon à former un ensemble indéformable mais démontable. Il s'agit donc de préférence de moyens de fixation réalisant un serrage de manière notamment à déformer légèrement les joues 32 et 33 pour enserrer entre elles les biellettes 4 et 7.

Le fait d'avoir une multiplicité de trous 37 sur les joues 32 et 33 va permettre, avec le même type de paire de biellettes 4 et 5, d'obtenir des orientations différentes du dispositif d'attelage et adaptées aux outils avec lesquels il est destiné à coopérer.

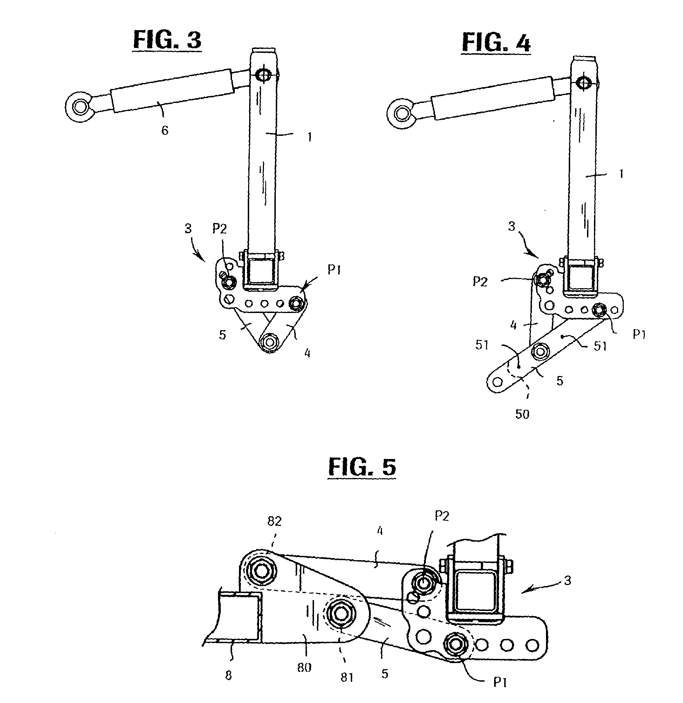

Ainsi, à la figure 3, les deux biellettes 4 et 5 représentées sont du même type que celles des figures 1 et 2. Toutefois, leur point commun de fixation à la machine de travail du sol 7 est disposé en-dessous de la partie horizontale des deux joues 32 et 33.

Dans les deux cas décrits précédemment, les points de fixation des biellettes forment un triangle fictif. Un tel agencement est suffisant pour constituer un ensemble résistant et non déformable.

De cette manière, si l'agriculteur vient à changer de matériel, il lui suffit de démonter les biellettes et d'adapter leurs nouveaux points de fixation aux nouveaux appareils dont il dispose.

Lorsque le fabricant de semoir est celui qui fournit également le dispositif d'attelage, il lui est seulement nécessaire de fournir la quantité nécessaire de jeux de biellettes et d'éléments de fixation. Un guide écrit d'utilisation indiquera, le cas échéant, en fonction des types de machine de travail du sol et de rouleau dont dispose l'agriculteur, comment et où fixer les biellettes.

Dans l'exemple représenté à la figure 4, la biellette 4 la plus courte est fixée directement sur la seconde biellette 5. Un tel agencement convient également.

Cette biellette 5 est fournie avec seulement deux trous. Elle comporte cependant des repères 51 qui peuvent servir à la réalisation de trous supplémentaires en cas de besoin. Cette biellette comporte par ailleurs au moins un repère 50 qui permet, le cas échéant, de réaliser par découpe un raccourcissement de la biellette.

Enfin, à la figure 5, on a illustré un exemple de réalisation dans lequel les points de fixation des biellettes sur la machine de travail du sol 8 sont différents - faisant en effet usage de deux trous 81 et 82 - de sorte que l'on constitue ainsi un quadrilatère indéformable une fois monté, mais démontable de telle façon que sa forme puisse être modifiée en vue d'un nouveau montage.

## Revendications

1. Dispositif d'attelage d'un semoir (7) à une machine de travail du sol (8), du type comprenant un châssis (1) en forme générale de "V" renversé, dont les branches (10) ont une extrémité coudée vers l'extérieur pour constituer des guides transversaux (12), ce châssis étant destiné à être fixé à la machine de travail du sol (8) par au moins une paire d'éléments de fixation **(B)** dirigés transversalement, ces guides (12) et cette paire d'éléments **(B)** étant disposés symétriquement de part et d'autre du plan longitudinal médian du châssis (1), ce dernier comprenant également deux étriers (3) aptes à être déplacés chacun latéralement et immobilisé dans la position voulue sur l'un des guides (12), chaque étrier (3) comportant une portion en forme de chape (3b) dont les deux joues (32, 33) s'étendent longitudinalement, **caractérisé par le fait qu**'il comporte en outre au moins deux paire de biellettes (4, 5), chaque paire étant reliée à la machine de travail du sol (8) par au moins un des éléments de fixation **(B)** et à chacune desdites chapes (3b) en deux points différents **(P**_{**1**}**, P**_{**2**}**)** présents sur chaque joue (32,33), l'ensemble ainsi formé étant indéformable mais démontable.

2. Dispositif selon la revendication 1, **caractérisé par le fait que** les biellettes (4, 5) d'une même paire sont reliées à ladite machine par un seul élément de fixation (B), de sorte que les trois points de liaison desdites biellettes (4, 5) à la machine (8) et aux chapes (3b) forment un triangle fictif.

3. Dispositif selon la revendication 1, **caractérisé par le fait qu**'une des biellettes (5) de chaque paire est reliée à ladite machine (8) par un élément de fixation **(B),** tandis que la seconde biellette (4) est fixée sur la première (5).

4. Dispositif selon la revendication 1, **caractérisé par le fait que** les biellettes (4, 5) d'une même paire sont reliées à ladite machine (8) par des éléments de fixation (**B**) en des points différents, de sorte que les quatre points de liaison desdites biellettes (4, 5) à la machine (8) et aux chapes (3b) forment un quadrilatère fictif.

5. Dispositif selon l'une des revendications 1 à 4, **caractérisé par le fait que** lesdites chapes (3b) comportent au moins trois trous (37), de sorte que les points de liaison desdites biellettes (4, 5) auxdites chapes peuvent être sélectionnés parmi deux de ces au moins trois trous (37).

6. Dispositif selon l'une des revendications 1 à 5, **caractérisé par le fait que** lesdites biellettes (4, 5) sont de longueurs différentes.

7. Dispositif selon l'une des revendications 1 à 6, **caractérisé par le fait que** l'extrémité desdites biellettes (4, 5) destinée à être fixée à ladite machine (8) comporte une série de trous voisins, ces biellettes étant aptes à être sectionnées entre deux trous voisins pour présenter une longueur prédéterminée.

8. Dispositif selon l'une des revendications 1 à 7, **caractérisé par le fait que** la pointe du châssis (1) en forme de "V" renversé présente un trou de passage pour l'axe d'articulation (60) d'une biellette d'attelage (6) de longueur réglable.

## Claims

1. A device for coupling a seeder (7) to a cultivation machine (8), the device being of the type comprising a frame (1) generally in the form of an upside-down V-shape, with each of its limbs (10) having one end bent outwards to constitute a respective transverse guide (12), the frame being for fastening to the cultivation machine (8) via at least one pair of transversely-directed fastener elements (B), the guides (12) and said pair of elements (B) being disposed symmetrically on either side of a longitudinal midplane of the frame (1), the frame also having two brackets (3) each suitable for being moved laterally and for being held in a desired position on a respective one of the guides (12), each bracket (3) including a portion in the form of a fork (3b) with two tines (32, 33) extending longitudinally, the device being **characterized in that** it further comprises at least one pair of links (4, 5), each pair being connected to the cultivation machine (8) via at least one of the fastener elements (B), and to each of said forks (3b) at two different points (P₁, P₂) present on each tine (32, 33), the assembly as formed in this way being undeformable but removable.

2. A device according to claim 1, **characterized by** the fact that the links (4, 5) in a given pair are connected to said machine via a single fastener element (B) such that the three points connecting said links (4, 5) to the machine (8) and to the forks (3b) define a triangle.

3. A device according to claim 1, **characterized by** the fact that one of the links (5) in each pair is connected to said machine (8) by a fastener element (B), while the second link (4) is fastened to the first link (5).

4. A device according to claim 1, **characterized by** the fact that the links (4, 5) of a given pair are connected to said machine (8) by fastener elements (B) at different points, such that the four points of connection between said links (4, 5) and the machine (8) and the forks (3b) define a quadrilateral.

5. A device according to any one of claims 1 to 4, **characterized by** the fact that said forks (3b) have at least three holes (37), such that the points of connection between said links (4, 5) and said forks can be selected from two of the at least three holes (37).

6. A device according to any one of claims 1 to 5, **characterized by** the fact that said links (4, 5) are of different lengths.

7. A device according to any one of claims 1 to 6, **characterized by** the fact that the ends of said links (4, 5) for fastening to said machine (8) have respective series of adjacent holes, the links being suitable for being cut between two adjacent holes in order to present a predetermined length.

8. A device according to any one of claims 1 to 7, **characterized by** the fact that the point of the upside-down V-shape frame (1) presents a through hole for passing the hinge pin (60) of a coupling link (6) of adjustable length.

## Patentansprüche

1. Kupplungsvorrichtung zwischen einem Sähgerät (7) und einem Bodenbearbeitungsgerät (8), von dem Typ, der ein Gestell (1) in der allgemeinen Form eines umgedrehten "V" umfaßt, dessen Arme (10) ein nach außen abgewinkeltes Ende haben, um querverlaufende Führungen (12) zu bilden, wobei dieses Gestell dazu bestimmt ist, an dem Bodenbearbeitungsgerät (8) mittels wenigstens eines Paares quergerichteter Befestigungselemente (B) befestigt zu werden, diese Führungen (12) und dieses Paar von Elementen (B) symmetrisch an der einen und anderen Seite der Mittellängsebene des Gestells (1) angeordnet sind, dieses letztgenannte auch zwei Bügel (3) umfaßt, die dazu geeignet sind, jeweils seitlich versetzt und in der gewünschten Lage auf einer der Führungen (12) festgelegt zu werden, und jeder Bügel (3) einen Abschnitt in Form eines Gabelbügels (3b) umfaßt, dessen beide Wangen (32, 33) sich in Längsrichtung erstrecken, **dadurch gekennzeichnet, daß** sie außerdem mindestens zwei Paare von Schwingarmen (4, 5) umfaßt, wobei jedes Paar mit dem Bodenbearbeitungsgerät (8) durch mindestens eines der Befestigungselemente (B) und mit jedem der genannten Gabelbügel (3b) an zwei unterschiedlichen Punkten (P₁, P₂) verbunden ist, die auf jeder Wange (32, 33) vorliegen, wobei die so geformte Baugruppe zwar unverformbar, aber demontierbar ist.

2. Vorrichtung nach Anspruch 1, **dadurch gekennzeichnet, daß** die Schwingarme (4, 5) ein und desselben Paares mit dem genannten Gerät durch ein einziges Befestigungselement (B) derart verbunden sind, daß die drei Verbindungspunkte der genannten Schwingarme (4, 5) mit dem Gerät (8) und mit den Gabelbügeln (3b) ein fiktives Dreieck bilden.

3. Vorrichtung nach Anspruch 1, **dadurch gekennzeichnet, daß** einer der Schwingarme (5) eines jeden Paares mit dem genannten Gerät (8) durch ein Befestigungselement (B) verbunden ist, während der zweite Schwingarm (4) auf dem ersten (5) befestigt ist.

4. Vorrichtung nach Anspruch 1, **dadurch gekennzeichnet, daß** die Schwingarme (4, 5) ein und desselben Paares mit dem genannten Gerät (8) durch Befestigungselemente (B) an unterschiedlichen Punkten derart verbunden sind, daß die vier Punkte der Verbindung der genannten Schwingarme (4, 5) mit dem Gerät (8) und mit den Gabelbügeln (3b) ein fiktives Viereck bilden.

5. Vorrichtung nach einem der Ansprüche 1 bis 4, **dadurch gekennzeichnet, daß** die genannten Gabelbügel (3b) mindestens drei Löcher (37) umfassen, derart daß die Punkte der Verbindung der genannten Schwingarme (4, 5) mit den genannten Gabelbügeln unter zweien dieser mindestens drei Löcher (37) ausgewählt werden können.

6. Vorrichtung nach einem der Ansprüche 1 bis 5, **dadurch gekennzeichnet, daß** die genannten Schwingarme (4, 5) unterschiedliche Länge aufweisen.

7. Vorrichtung nach einem der Ansprüche 1 bis 6, **dadurch gekennzeichnet, daß** das Ende der genannten Schwingarme (4, 5), das dazu bestimmt ist, an dem genannten Gerät (8) befestigt zu werden, eine Reihe benachbarter Löcher umfaßt, wobei diese Schwingarme dazu geeignet sind, zwischen zwei benachbarten Löchern abgeschnitten zu werden, um eine vorbestimmte Länge aufzuweisen.

8. Vorrichtung nach einem der Ansprüche 1 bis 7, **dadurch gekennzeichnet, daß** die Spitze des umgedreht V-förmigen Gestells (1) ein Durchgangsloch für die Anlenkachse (60) eines Kupplungsschwingarmes (6) mit einstellbarer Länge aufweist.
